# EUROPÄISCHE PATENTSCHRIFT

(11) **EP 0 440 884 B1**
(45) Veröffentlichungstag und Bekanntmachung des Hinweises auf die Patenterteilung: **26.06.1996**
(21) Anmeldenummer: 90120245.7
(22) Anmeldetag: 22.10.1990
(51) Int. Cl.: C03B 23/025, C03B 27/044, C03B 35/16

(54) **Vorrichtung zum Wölben von Glasscheiben**
Apparatus for bending glass sheets
Appareil pour le bombage des feuilles de verre

(30) Priorität: 08.02.1990 DE 4003828
(43) Veröffentlichungstag der Anmeldung: 14.08.1991
(73) Patentinhaber: WSP INGENIEURGESELLSCHAFT FÜR WÄRMETECHNIK, STRÖMUNGSTECHNIK UND PROZESSTECHNIK MIT BESCHRÄNKTER HAFTUNG, D-52074 Aachen (DE)
(72) Erfinder: Kramer, Carl, Prof.-Dr.-Ing., W-5100 Aachen (DE)
(74) Vertreter: Schwabe - Sandmair - Marx

(56) Entgegenhaltungen:
- EP-A- 0 114 168
- FR-A- 2 221 409

## Beschreibung

Die Erfindung betrifft eine Vorrichtung zum Wölben von auf die Erweichungstemperatur erwärmten Glasscheiben nach dem Oberbegriff des Anspruchs 1, wie sie aus der FR-A-2 221 409 hervorgeht.

Aus der DE-PS 16 79 961 und DE-PS 23 31 584 sind Vorrichtungen zum Wölben von Glasscheiben bei Erweichungstemperatur bekannt, bei denen die Wölbeform mittels gebogener Stäbe gebildet wird. Jeder Stab kann um eine durch seine beiden Enden verlaufende Achse geschwenkt werden. Bei dieser Schwenkbewegung ergibt sich eine von der Form des Stabes abhängige Verwölbung der Glasscheibe. Falls die Schwerkraft für die erforderliche Formänderung nicht ausreicht, kann noch zusätzlich eine Biegekraft durch Andrücken der Scheibe an eine Gegenform oder an Gegenrollen, die ähnlich wie die Formstäbe ausgebildet sind, erzielt werden. Nachteilig bei diesen Vorrichtungen sind die Probleme in Bezug auf die exakte Einhaltung der Position der Biegeachse. Es besteht nämlich keine Möglichkeit zur Kantenführung. Außerdem lassen sich Vorrichtungen dieser Art für Architekturglas nur bedingt verwenden, da hier nicht mit einem konstanten, meist zylindrischen Krümmungsradius, wie z. B. bei der Seitenverglasung von Automobilen, gearbeitet werden kann, sondern ein wechselnder Krümmungsradius benötigt wird. Dieser Krümmungsradius ist zumeist wesentlich kleiner als bei zylindrisch gebogenen Scheiben für die Automobilverglasung, bei denen die Radien meist über 800 mm betragen. Dagegen können die Krümmungsradien bei Architekturglas manchmal nur 100 bis 300 mm ausmachen. Diese Krümmungsradien lassen sich mit den bekannten Vorrichtungen nicht erzielen. Außerdem muß oft nur in einem Streifen eine zylindrische Krümmung erzeugt werden und die diesen Streifen eingrenzenden Flächen der Glasscheibe plan bleiben. Solche Glasscheiben werden im Architekturbereich z. B. zur Bildung von Außenecken in Glasfassaden oder auch für Thekenverglasungen, Duschabtrennungen, etc. verwendet. Auch solche Glasscheiben können mit den bekannten Vorrichtungen nicht gewölbt werden.

Auch weitere bekannte Vorrichtungen, wie sie z. B. in der DE-AS 2 621 902 beschrieben werden, eignen sich nicht zur Herstellung derartiger Glasscheiben. Bei dieser Vorrichtung läuft die Glasscheibe auf nach oben konvex gebogene Formstäbe auf, deren Stichmaß der Biegelinie in Durchlaufrichtung zunimmt. Als Biegekraft wirkt hier nur die Schwerkraft. Theoretisch ließe sich diese Vorrichtung zur Erzeugung der beschriebenen Biegungen mit zwei geraden Schenkeln und einer Innenkrümmung verwenden. Allerdings würden sich praktisch kaum überwindliche Schwierigkeiten in Bezug auf die Führung der Glasscheibe ergeben. Außerdem wäre zur Erzielung der planen Schenkel für jede geforderte Krümmung ein separater Satz von aufwendig ausgebildeten Formstäben erforderlich.

Aus der US-PS 3,856,499 geht eine Vorrichtung zum Wölben von Glasscheiben mit zwei in vertikaler Richtung übereinander angeordneten Sätzen von Formrollen mit konkaver bzw. konvexer Oberflächer hervor. Die beiden Formrollensätze können relativ zueinander verschoben werden, so daß die zwischen den Rollen eingeführte Glasscheibe ähnlich wie zwischen einem Formwalzenpaar verformt wird. Abgesehen von der schlechten optischen Qualität, die mit einem solchen Walzbiegeverfahren erzielt wird, ergibt sich bei engen Radien an dieser Vorrichtung ein großer Unterschied in der Umfangsgeschwindigkeit der Rollen gegenüber dem durch den von den Rollen gebildeten Walzspalt transportierten Glas. Außerdem muß für jede Glasscheibenform ein neuer Formrollensatz bereitgestellt werden, was in Bezug auf Investitionskosten, Umrüstungsaufwand und ähnliches nachteilig ist.

Ähnlich nachteilig für die Biegung optisch einwandfreier Architekturgläser ist die Vorrichtung nach der US-PS 3,701,644.

Eine weitere Vorrichtung zum Wölben von auf die Erweichungstemperatur erwärmten Glasscheiben ist aus der DE-PS 25 32 318 bekannt. Die Formstäbe werden hier durch einen Kern und eine drehbare, angetriebene Außenhöhle bzw. eine Hülse gebildet. Zum Transport der noch planen Glasscheiben in die Vorrichtung hinein werden die gewölbten Formstäbe in die horizontale Lage geschwenkt, so daß eine horizontale Transportebene entsteht. Zur Einleitung des Biegevorgangs werden die gewölbten Formstäbe nach unten geschwenkt. Die eigentliche Verwölbung wird durch Anheben des gesamten Systems mit den Formstäben nach oben und Andrücken gegen eine Gegenform erreicht.

Auch dieses bekannte Prinzip ist nur für relativ große Biegeradien verwendbar, da sich für kleine Biegeradien das Prinzip der angetriebenen äußeren Hülle nicht dauerhaft realisieren läßt, weil diese bei jeder Umdrehung die Faserverkürzung zwischen Außenradius und Innenradius mitmachen muß. Außerdem ist es bei dieser Vorrichtung nicht möglich, mit einem universellen Formensatz Biegungen mit quer Transportrichtung veränderlichem Krümmungsradius sowie mit geraden Schenkeln zu erzeugen. Schließlich ist noch, bedingt durch die Kinematik des verwendeten Prinzips, die Benutzung dieser Vorrichtung auch theoretisch auf relativ große Biegeradien beschränkt.

Auch seien noch die DE-PS 31 50 859 bzw. die äquivalente EP-PS 0 114 168 erwähnt, aus denen eine Vorrichtung bekannt ist, bei der die zu verwölbende Glasscheibe auf geraden Transportstäben aus einem Ofen in die Biegevorrichtung transportiert wird. Diese Vorrichtung weist eine horizontale Führung für die zu wölbenden Glasscheiben auf. Die für die horizontale Führung notwendige horizontale Fläche wird von Transportstäben und -rollen für die zu wölbende Glasscheibe gebildet, wobei die Transportstäbe beweglich sind. Die bekannte Vorrichtung weist in einem Wölbungsbereich mehrere Formstäbe auf. Die Formstäbe sind auf die gewünschte Kontur der zu wölbenden Glasscheibe einstellbar. Zum direkten Wölben der Glasscheibe ist eine Formvorrichtung mit einer Anpreßvorrichtung vorgesehen, die die zu wölbende Glasscheibe in der Mitte mit einem Anpreßdruck beaufschlagen kann. Während der Anpreßdruck der Anpreßvorrichtung die auf die Erweichungstemperatur erwärmte Glasscheibe in der Mitte belastet, werden die Transportstäbe unter der Glasscheibe weg vertikal nach unten bewegt. Auf diese Weise gelangt die zu wölbende Glasscheibe in den Einflußbereich der Formstäbe und wird von der Anpreßvorrichtung an die Formstäbe angedrückt. Bei dieser Vorrichtung haben die Transportstäbe sowie die Formstäbe einen Kern und eine drehbare, angetriebene Außenhülle.

Nachteilig bei dieser bekannten Vorrichtung ist, daß die Wölbung von beschichteten Gläsern nicht möglich ist, da die als Andruckrolle ausgebildete Anpreßvorrichtung, die in unmittelbaren Kontakt mit der Glasoberfläche tritt, eine derartige Beschichtung beschädigt. Außerdem ist die Herstellung von gewölbten Glasscheiben mit geraden Schenkein, in deren Bereich die verformte Glasscheibe plan bleibt, nicht möglich ist, da die zu verformende Scheibe gerade in diesem Bereich zuerst auf den Formstäben aufliegt. Die Stützwirkung der geraden Transportstäbe, die die gewünschte Planität gewährleisten könnten, geht damit gerade in diesem Bereich zuerst verloren.

Aus der gattungsbildenden FR-A-2 221 409 ist eine Vorrichtung mit Transportstäben bekannt, die einerseits den Transport einer zu bearbeitenden Glasscheibe und andererseits deren Verformung ermöglicht. Die bekannte Vorrichtung ist derart ausgestaltet, daß eine in die Verformungszone eingeführte Glasscheibe während des gesamten Verformungsvorganges an einer Stelle verharrt, so daß sich die Form der Stäbe in nachteiliger Weise in die zu formende Glasscheibe einprägt.

Aus der US-A-4,773,925 ist eine Vorrichtung zum Biegen von Glasscheiben bekannt. Bei dieser Vorrichtung sind mehrere Transport- bzw. Förderrollen auf jeweiligen verbiegbaren Wellen angeordnet. Die Wellen können jeweils über eine mittig an der jeweiligen Welle angreifende Stellstange in ihrer Biegung verstellt werden. Hier können nur Scheiben mit einem kontinuierlichen Biegeradius hergestellt werden.

Aus der FR-A-2 169 337 ist eine Vorrichtung zum Biegen von Glasscheiben bekannt, bei der die Glasscheibe im wesentlichen vertikal transportiert wird, wobei die Glasscheibe seitlich über Rollen in vertikaler Richtung abgestützt wird. Durch die vertikale Ausrichtung der Glasscheibe soll die Last der Glasscheibe, die ansonsten dazu führen würde, daß die Glasscheibe zwischen die Formelemente der Formstrecke partiell absinken würde, von der Glasscheibe selbst aufgenommen werden. Hierdurch soll die Ausbildung einer Welligkeit verhindert werden.

Es ist die Aufgabe der vorliegenden Erfindung, eine gattungsgemäße Vorrichtung derart weiterzubilden, daß es möglich ist, diese sehr flexibel für die Herstellung unterschiedlichster Scheibenformen zu verwenden.

Diese Aufgabe wird erfindungsgemäß durch die in dem Patentanspruch 1 angegebenen Merkmale gelöst.

Zweckmäßige Ausführungsformen sind durch die in den Unteransprüchen aufgeführten Merkmale definiert.

Die erfindungsgemäße Ausführung zeichnet sich dadurch aus, daß mehrere Formelemente auf die gewünschte Kontur der zu wölbenden Glasfläche einstellbar sind, wobei diese linienhaften Formelemente durch bereichsweise an die Scheibe anliegende Rollen gebildet werden, die zum Weitertransport der Scheibe während und nach dem Biegevorgang angetrieben werden können. Dabei sind die Position der Achsen, um die die beiden Transportstangengruppen nach unten verschwenkbar sind, auch in der Richtung der Breite verstellbar.

Die mit der erfindungsgemäß ausgestalteten Vorrichtung erzielten Vorteile beruhen auf folgender Funktionsweise: Eine aus einem Ofen austretende Glasscheibe wird über die in ihrer Ausgangsstellung einen planen Rollenherd bildenden Transportstäbe in den Wölbungsbereich transportiert. Dabei ist die aus dem Ofen austretende Glasscheibe auf die Erweichungstemperatur erwärmt, d. h., sie ist plastisch verformbar, liegt jedoch noch in ihrer planen Grundform vor.

Nachdem die Hinterkante der zu wölbenden Glasscheibe in den Verformungsbereich eingetreten ist, schwenken die in zwei Gruppen zusammengefaßten Transportstäbe, die jeweils an den Rändern des Rollenherdes um eine in Transportrichtung weisende Achse schwenkbar gelagert sind, nach unten. Dabei biegt sich die Scheibe in der Mitte durch und legt sich auf die unterhalb der Transportstäbe befindlichen Formelemente auf. Die Schwenkbewegung der Transportstäbe endet in einer unteren Stellung, in welcher die von den Transportstäben aufgespannte Tangentialebene ihrerseits wiederum tangential in die von den linienhaften Formelemente, z. B. Formstäben aufgespannte Formfläche einläuft, wobei die Formstäbe jeweils zwischen den Transportstäben angeordnet werden. Dadurch erhält die Scheibe während des ganzen Biegevorgangs in ihrem Kantenbereich eine genaue, plane Führung. Dies ist besonders bei Architekturscheiben außerordentlich wichtig, da diese fast ausschließlich aus rechteckigen Glasscheiben gefertigt werden und auf die Parallelität und Planheit der Kanten des fertig gebogenen und vorgespannten Glases ein außerordentlich großer Wert gelegt wird.

Da die Glasscheibe während des gesamten Biegevorgangs auf den Transportstäben aufliegt, ist ein spezieller Antrieb für die Rollen oder Hülsen, die die Glasscheibe über die linienhaften Formelemente führen, nicht unbedingt erforderlich. Ein solcher Antrieb kann z. B. erreicht werden, indem man die Formelemente aus biegsamen Wellen herstellt, die in üblicher und bekannter Weise angetrieben werden. Bei steiferen Glasscheiben, bei denen entweder durch die größere Glasdicke oder durch eine relativ niedrige Temperatur noch eine derartige Biegefestigkeit besteht, daß die Schwerkraft alleine zum Aufliegen der Scheibe auf das Formbett nicht ausreicht, kann eine Verformungskraft durch seitliche Führungsrollen ausgeübt werden. Diese seitlichen Führungsrollen werden jeweils über den Transportstäben angeordnet und führen die zu wölbende Glasscheibe an ihren Längskanten, ähnlich wie mit einem Spurkranz. Diese Führungsrollen sind zweckmäßigerweise ebenfalls in Gruppen zusammengefaßt und können in Achsrichtung der Transportstäbe synchron mit dem Abschwenken der Transportstäbe verstellt werden, so daß auch die Biegeachse in Bezug auf die zu verformende Glasscheibe genau positioniert werden kann.

Um die seitlichen Führungsrollen ohne großen Aufwand justieren zu können, ist es vorteilhaft, wenn die Transportstäbe über eine Zwangsführung, z. B. eine Kurvenscheibe oder eine vergleichbare Mechanik, mit den seitlichen Führungsrollen gekoppelt sind. Hierdurch lassen sich die Führungsrollen synchron mit der Schwenkbewegung der Transportstäbe verstellen. Dabei gibt die Schwerkraft die Biegerichtung für die zu wölbende Glasscheibe vor, und die Führungsrollen überwinden die z. B. bei dickeren Glasscheiben vorhandenen Widerstände und tragen damit zum Biegevorgang bei.

Die seitlichen Führungsrollen sorgen gleichzeitig auch für die gewünschte Planheit der seitlichen Schenkel der gewölbten bzw. gebogenen Glasscheibe.

Vorzugsweise sind die Führungsrollen in zwei Gruppen zusammengefaßt, die entlang einer in Transportrichtung weisenden Linie angeordnet sind. Dabei können sowohl beide Gruppen von Führungsrollen separat oder z. B. über eine Kurvenscheibe in Zusammenhang mit den Transportrollen gemeinsam verstellt werden.

Es kann aber auch zweckmäßig sein, die Verstellung der Führungsrollen auf einer Seite der Vorrichung kinematisch, also durch Formschluß, zu bewerkstelligen, während auf der anderen Seite der Andruck der Führungsrollen mittels einer verstellbaren Kraft erfolgt. Auf diese Weise kann die Einhaltung einer genauen Lage der Scheibe auf dem durch die Formstäbe definierten Formbett erreicht und zugleich den fertigungsbedingten Breitetoleranzen der zu biegenden Scheiben Rechnung getragen werden.

Die Schwenkbewegung der Transportstäbe um deren Achse wird dazu genutzt, mittels einer mitgeschwenkten Kurvenscheibe und einer gestellfesten Kurvenrolle die Verschiebung der seitlichen Führungsrollen zu bewirken. Die Kurvenscheibe, die der Biegeform und -breite der zu biegenden Glasscheibe entsprechen muß, stellt dabei den eindeutigen kinematischen Zusammenhang her.

Dabei ist es insbesondere zweckmäßig, auf beiden Seiten der Vorrichtung für jede Lagerleiste der Transportrollen jeweils zwei Kurvenscheiben und Kurvenrollen anzuordnen. Für die Befestigung der Kurvenrollen eignet sich insbesondere der Bereich der Gestellkonstruktion, der auch die Lager für die Drehung trägt.

Die seitlichen Führungsrollen und auch die Rollen, die von den linienhaften Formelementen getragen werden, sind besonderen Belastungen ausgesetzt. Es hat sich deshalb als außergewöhnlich vorteilhaft erwiesen, diese Rollen aus verdichtetem Silikat-Fasermaterial mit hoher Druckfestigkeit und hoher Abriebfestigkeit herzustellen. Dabei ist als Werkstoff Calit 434 oder ein gleichwertiger Werkstoff besonders bevorzugt. Hersteller dieses Werkstoffes ist beispielsweise die Firma Segliwa GmbH, Wiesbaden.

Während des gesamten Biegevorgangs wird die zu wölbende Glasscheibe von den Transportstäben weiter transportiert. Die Formänderung findet also nicht nur an einer Stelle in der erfindungsgemäßen Vorrichtung statt, sondern geschieht vielmehr über deren Länge kontinuierlich. Dies erfordert, daß die Vorrichtung um eine gewisse Strecke länger ausgeführt wird als die maximale Länge der zu biegenden Glasscheibe.

Der Umstand, daß bei der Vorrichtung nach der Erfindung der Transport der Glasscheibe in Richtung der Mantellinien des Biegezylinders, also in Richtung der langen Achse der Glasscheibe erfolgt, ist für das optische Erscheinungsbild der gebogenen Scheiben vorteilhaft. Hier wirken sich nämlich minimale, nicht vermeidbare optische Distursionen durch die Rollen nicht störend aus, weil Reflexe an den vertikal eingebauten Scheiben quer zu diesen möglichen Störungen stehen.

Ein wesentlicher Vorteil der erfindungsgemäßen Vorrichtung ist noch, daß sie relativ einfach auf alle möglichen Biegeformen eingestellt werden kann. Hierzu dienen die vertikal an den linienhaften Formelementen angreifenden Hubelemente, die, z. B. durch einen Mikrorechner gesteuert, die Einstellung der gewünschten Biegeform in kürzester Zeit ermöglichen. Dieser Mikrorechner übernimmt auch die Bestimmung der optimalen Position der Schwenkachse für die beiden Gruppen von Transportstäben. Diese Position läßt sich bei vorgegebener Biegelinie mittels einfacher geometrischer Beziehungen problemlos ermitteln. Auf diese Art und Weise wird erreicht, daß der Bediener der Anlage jeweils nur noch mittels eines im Mikrorechner abgespeicherten Menue-Programms die Hauptabmessungen in den Rechner eingeben muß, die die Form der zu biegenden Glasscheibe definieren. Die Errechnung aller Betriebsdaten und die entsprechende Einstellung der Vorrichtung erfolgen dann automatisch.

Wird die Steuerung der seitlichen Führungsrollen hauptsächlich durch die Kurvenscheibe übernommen, so kann der Mikrorechner um die entsprechenden Steuerungsaufgaben entlastet werden.

In ähnlicher Weise werden auch die gebogenen Tragstäbe für die Glasscheibe in der Vorspannstrecke und im Entnahmetisch verstellt. In der Vorspannstrecke befinden sich Düsenarme in den Freiräumen zwischen den gebogenen Tragstäben. Diese Düsenarme haben an geeigneter Stelle ein Gelenk, so daß das Vorspanndüsenfeld einem weiten Bereich von Glasscheibenkrümmungen angepaßt werden kann. Die Anpassung der Form der Düsenarme an die Biegeform des Glases erfolgt durch Befestigen der Auflagen oder Haltevorrichtungen der Düsenarme an den Hubelementen, die zur Verstellung der gebogenen Tragstäbe dienen. Genau über den Düsenarmen sind an der Oberseite der Glasscheibe Düsenrippen angeordnet, welche ebenfalls, wie die Düsenarme, mit einem Lochdüsensystem für höchsten Wärmeübergang versehen sind. Diese Düsenrippen bestehen ebenfalls aus Segmenten, welche mittels Drehgelenken miteinander verbunden sind. Durch Schwenken der Düsenrippensektionen um diese Gelenke kann - wie durch Schwenken der Düsenarme um die Drehpunkte an der Scheibenunterseite - eine Anpassung an die Glasscheibenform in einem großen Bereich von Biegungen erzielt werden. Die Verstellbarkeit der Düsenarme auf der Glasunterseite und der Düsenrippen auf der Glasoberseite erfordert den Anschluß der Versorgungskanäle für die Düsenrippen bzw. Düsenarmen mittels flexibler Leitungen.

Die Erfindung wird im folgenden anhand von Ausführungsbeispielen unter Bezugnahme auf die beigefügten schematischen Figuren noch näher erläutert. Dabei werden weitere Vorteile und Merkmale der erfindungsgemäßen Vorrichtung offenbart. Es zeigen:
- Figur 1: einen schematischen Längsschnitt einer Gesamtanlage mit der erfindungsgemäßen Vorrichtung;
- Figur 2: eine vereinfachte perspektivische Darstellung der erfindungsgemäßen Verformungsstation;
- Figur 3: einen schematischen Querschnitt durch die Abkühl- bzw. Vorspannstrecke;
- Figur 4: einen schematisierten Längsschnitt durch die Abkühlstrecke;
- Figur 5: eine perspektivische seitliche Ansicht einer weiteren Ausführungsform der erfindungsgemäßen Vorrichtung;
- Figur 6: eine schematische Ansicht einer mechanischen Führungsvorrichtung für die seitlichen Führungsrollen unter Verwendung einer Kurvenscheibe.

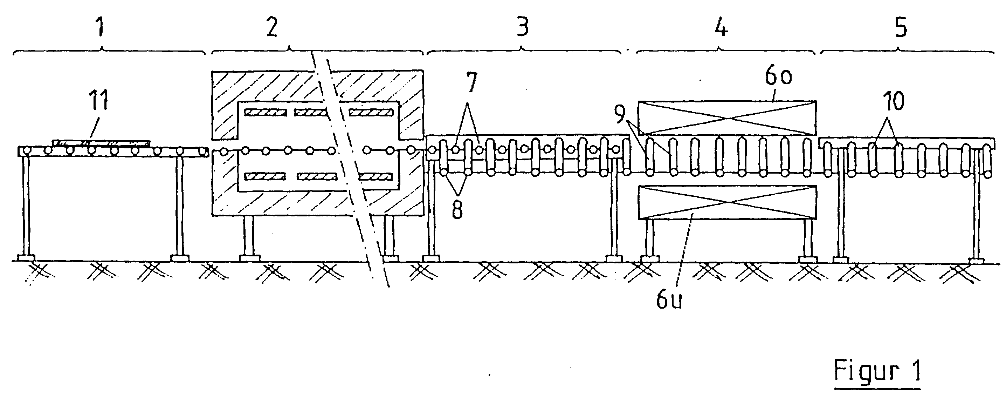

Wie man aus Figur 1 erkennen kann, weist die Gesamtanlage einen konventionellen Aufgabetisch 1 auf, auf den eine Glasscheibe 11 aufgelegt wird. Die Erwärmung der Glasscheibe 11 auf die Erweichungstemperatur erfolgt z. B. in einem Rollenherdofen 2. An den Ofen 2 schließt sich eine Verformungs- bzw. Wölbungsstation 3 an. Hinter der Verformungsstation befinden sich eine Abkühl- bzw. Vorspannstrecke 4 und schließlich ein Entnahmebereich 5 für die gebogene und abgekühlte Glasscheibe. In der Abkühlstrecke sind zwei Luftversorgungskästen für ein oberes Düsensystem 6 o und ein unteres Düsensystem 6 u angedeutet. In der Verformungsstrecke 3 sind die unter dem in seiner Ausgangslage horizontalen Rollenherd aus geraden Transportstäben 7 mit drehbaren Hülsen befindlichen linienhaften Formelemente 8, nämlich Formstäbe, zu erkennen. Ähnlich geformte Tragerollen bzw. Tragestäbe 9 mit drehbaren Hülsen befinden sich in der Abkühlstrecke 4 und im Entnahmebereich 10.

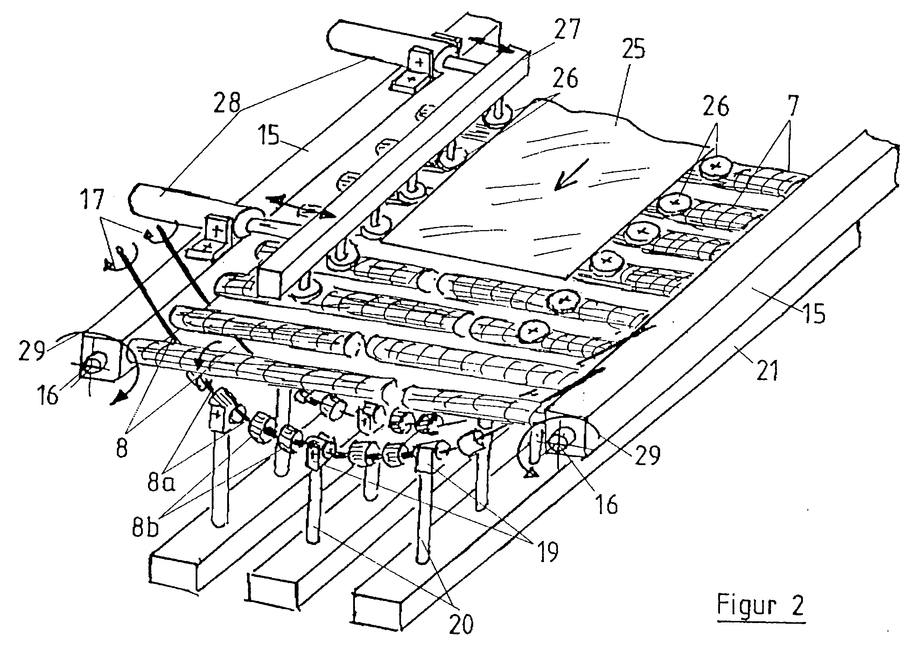

Wesentliche konstruktive Details einer vorteilhaften Ausführungsform der Verformungsstation gehen aus der perspektivischen Schemaskizze gemäß Figur 2 hervor. Diese Skizze zeigt nur einen Längenabschnitt der Vorrichtung. Die geraden Transportstäbe 7 sind in Lagerbalken 15 verlagert, welche mittels Zapfen 16 oder ähnlichen Lagerungen am Gestell der Vorrichtung befestigt sind. Das Gestell selbst ist aus Gründen der Übersichtlichkeit in der Figur nicht dargestellt. Der Antrieb der Transportstäbe 7 wird zweckmäßigerweise in oder an den Lagerbalken 15 untergebracht. Die Darstellung der Details des Antriebs erübrigt sich, da hier nur bekannte Techniken verwendet werden.

Zwischen den geraden Transportstäben 7 befinden sich das Formbett bildende Formstäbe 8, deren Kerne aus biegsamen Wellen 8 a bestehen. Wie aus der Figur 2 ersichtlich, sind auf den biegsamen Wellen 8 a zahlreiche Rollen 8 b befestigt, über welche die Glasscheibe im gebogenen Zustand geführt wird. Die biegsamen Wellen 8 a werden ebenfalls angetrieben. Dies ist in der Figur durch die Drehpfeile 17 angedeutet. Details dieses Antriebs sind nicht gezeichnet, da ein solcher Antrieb dem Stand der Technik entspricht.

An Stützstellen 19 sind an den Formelementen 8 Hubstangen 20 angebracht. Diese Hubstangen 20 werden auf einem in Längsrichtung der Vorrichtung angeordneten Balken 21 befestigt. Dann läßt sich durch die Höhenverstellung des Balkens 21 die Höherverstellung aller Stützstellen 19 bewirken, die in diesem vertikalen Längsschnitt liegen. Ein Bewegungspfeil deutet die Bewegungsrichtung der auf Erweichungstemperatur erwärmten Glasscheibe 25 an. Diese Scheibe 25 ist gemäß Figur 2 noch nicht gebogen, weil sie noch auf den Transportstäben 7 in der planen Ausgangslage aufliegt. Dabei wird sie durch die seitlichen Führungsrollen 26 bereits geführt. Auf der linken Seite der Vorrichtung gemäß Figur 2 ist die Lagerung dieser Führungsrollen 26 in einer Lagerleiste 27 zu erkennen, die mittels Stellgliedern 28 in Achsrichtung der Transportstäbe 7 verstellt werden kann. Auf der rechten Seite ist diese Lagerleiste 27 einschließlich des Verstellmechanismus aus Gründen der Übersichtlichkeit weggelassen. Die Stellglieder 28 sind an dem Lagerbalken 15 für die geraden Transportstäbe befestigt.

Wenn nun die Scheibe 25 in ihrer gesamten Länge in die Vorrichtung eingefahren ist, so klappen die geraden Transportstäbe 7 durch eine Drehbewegung der Lagerbalken (15) um die Lagerzapfen 16, welche durch die Drehrichtungspfeile 29 angedeutet ist, nach unten, und die Scheibe 25 legt sich auf den Formelementen 8 auf, welche mittels der Stützstellen 19 durch eine entsprechende Vertikalbewegung der Hubstangen 20 zuvor auf die gewünschte Form eingestellt worden sind. Dabei folgt die Seitenführung durch die Rollen 26 mittels der Stellelemente 28 der Bewegung der Scheibenkanten auf den Transportstäben 7. Dadurch wird erreicht, daß die Scheibe 25 nach abgeschlossenem Biegevorgang genau im gewünschten Bereich auf den Formelementen 8 aufliegt. Es kann zweckmäßig sein, die Verstellung der Führungsrollen 26 auf einer Seite der Vorrichtung kinematisch, also durch Formschluß, zu bewerkstelligen, während auf der anderen Seite der Andruck der Führungsrollen 26 mittels einer verstellbaren Kraft erfolgt. Auf diese Weise kann die Einhaltung einer genauen Lage der Scheibe auf dem durch die Formstäbe 8 definierten Formbett erreicht und zugleich den fertigungsbedingten Breitentoleranzen der zu biegenden Scheiben Rechnung getragen werden. Während des Biegevorgangs wird die Scheibe 25 von den Transportstäben 7 und von den ebenfalls angetriebenen Rollen 8 b der Formelemente 8 in Richtung auf die Abkühlstrecke 4 weitertransportiert.

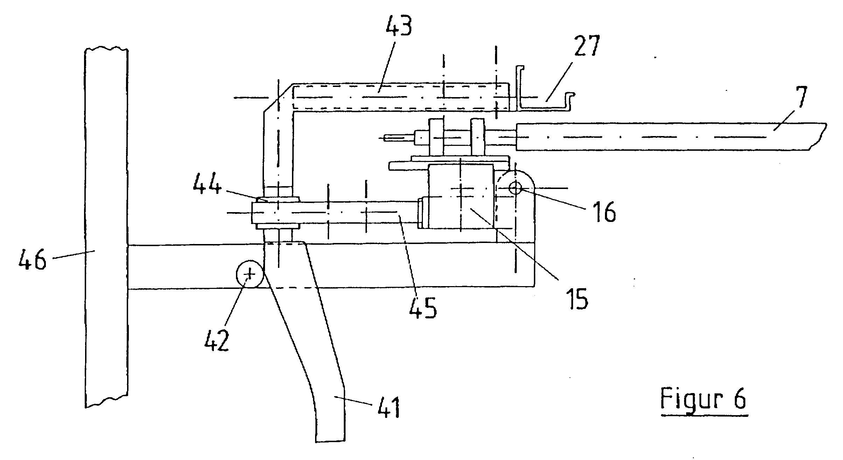

Eine weitere Möglichkeit für die Ausführung der Verformungsstation 3 besteht darin, wie in Figur 6 gezeigt, die Schwenkbewegung der Transportstäbe 7 um die Drehpunkte 16 dazu zu nutzen, mittels einer mitgeschwenkten Kurvenscheibe 41 und einer gestellfesten Kurvenrolle 42 die Verschiebung, welche ansonsten mit den Stellelementen 28 bewirkt wird, zu erzeugen. Hierzu dient die mit der Kurvenscheibe 41 fest verbundene Tragkonstruktion 43 der Lagerleiste 27, welche mit der Schiebehülse 44 auf der Schiebestange 45 entsprechend Kurvenschienenform und Schwenkwinkel des Lagerbalkens 15 verschoben wird. Die leicht auswechselbare Kurvenscheibe, welche der Biegeform und - breite der zu biegenden Glasscheibe 25 entsprechen muß, stellt dann den eindeutigen kinematischen Zusammenhang her. Natürlich ist es zweckmäßig, dann auf beiden Seiten der Vorrichtung für jede Lagerleiste 27 jeweils zwei Kurvenscheiben und Kurvenrollen anzuordnen. Zur Befestigung der Kurvenrollen eignet sich insbesondere der Bereich der Gestellkonstruktion 46, welcher auch die Lager für die Drehzapfen 16 trägt.

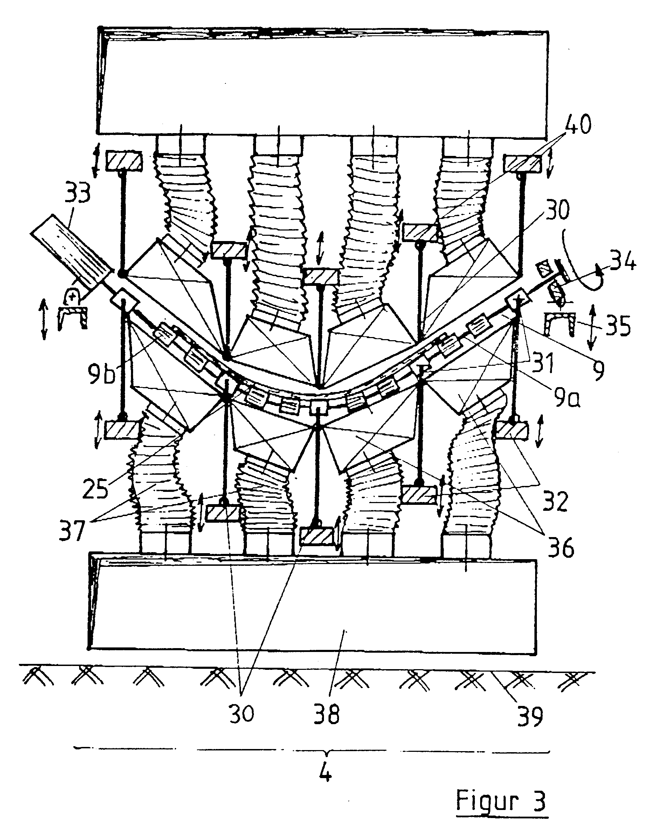

In der Abkühlstrecke 4, Figur 3, wird die Scheibe 25 über ähnliche Formelemente 9 wie in der Biegestrecke transportiert. Diese Formelemente 9 bestehen bei einer vorteilhaften Ausführungsform der Vorrichtung aus einer biegsamen Welle 9 a, welche an einem oder beiden Ende(n) angetrieben wird, und aus auf dieser biegsamen Welle 9 a befestigten Rollen 9 b, welche die Glasscheibe 25 tragen. An geeigneten Stützstellen 30 sind wiederum Stützglieder 31 angebracht, welche mit Hubbalken 32 jeweils in Gruppen gemeinschaftlich in der Höhe verstellt werden können. Der Längenausgleich der biegsamen Welle 9 a erfolgt z. B. in einer mit einer Schraubenfeder ausgestatteten Spannvorrichtung 33. Diese Spannvorrichtung 33 stellt zugleich das Loslager der biegsamen Welle 9 a dar. Diese Spannvorrichtung 33 und auch das Festlager 34 ist auf je einer gegenüber dem Gestell der Vorrichtung, das in der Figur 3 nicht eingezeichnet ist, höhenverstellbaren Lagerleiste 35 drehbar gelagert.

Zwischen den Stützstellen 30 sind an den Hubstangen Düsenkästen 36 befestigt, welche mittels flexibler Schläuche 37 aus einem unterhalb der Vorrichtung über dem Aufstellungsboden 39 befindlichen Luftversorgungskasten 38 gespeist werden. Eine ähnliche Konstruktion findet sich auf der Oberseite. Wenn man die Höhenverstellbewegung der oberen Hubbalken 40 mit derjenigen der unteren koppelt, so genügt eine einzige Höhenverstellung für beide Seiten. Man erhält auf diese Art und Weise eine Vorspannstrecke, die sich sehr einfach und ohne Umbau den jeweiligen Scheibenformen in sehr weiten Grenzen anpassen läßt.

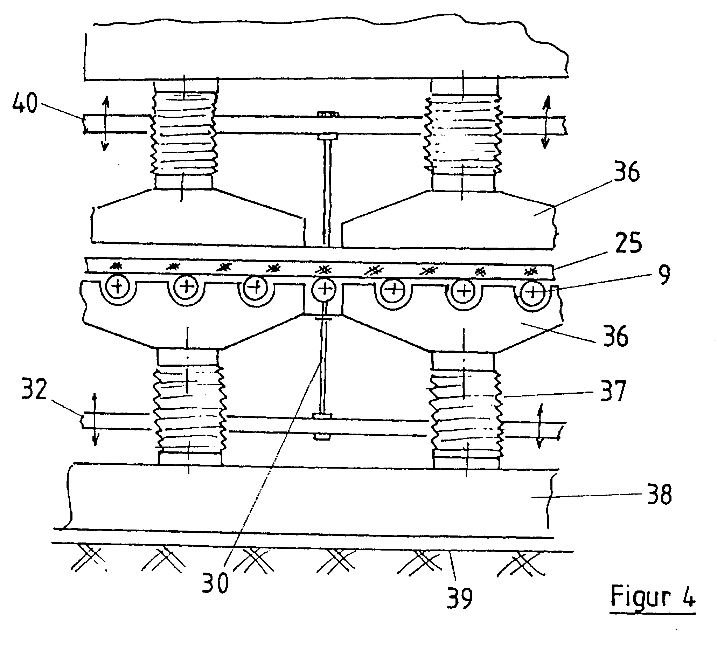

Aus dem Längsschnitt in Figur 4 ist noch zu erkennen, daß die Düsenkästen 36 auf der Unterseite der Glasscheibe 25 zweckmäßigerweise Aussparungen für die Formstäbe 9 erhalten. Auf diese Art und Weise kann ein kleinerer Abstand zwischen Düsen und Glasoberfläche erzielt werden. Zur Sicherstellung einer gleichmäßigen und druckverlustarmen Versorgung der Düsenkästen 36 mit der notwendigen Abkühlluft empfiehlt sich die Versorgung eines langen Düsenkastens mit mehreren flexiblen Schläuchen 37. Wenn ein langer Düsenkasten in mehrere kürzere Düsenkästen aufgeteilt wird, erfolgt die Luftversorgung je nach dem zur Verfügung stehendem Platz mit einem oder einer geringen Zahl von flexiblen Schläuchen 37.

Wichtig ist noch die Abstimmung der Breite der Düsenkästen 36 auf die Form der mittels der Stützstellen zu realisierenden Polynome, welche die Kontur der gebogenen Scheibe beschreiben. Hier bieten sich konstruktiv zwei Möglichkeiten.

Wenn die Verbindung an den Stützstellen 31 in Form einfacher Gelenke ausgeführt wird, so müssen die Hubstangen 30, welche die Stützstellen mit den Hubbalken 32 verbinden, an diesen ebenfalls gelenkig gelagert sein. Die Stützlager der biegsamen Welle sollten in diesem Fall auf dieser nicht verschieblich sein. Diese Situation ist in Figur 3 dargestellt. Bei einer Veränderung der Biegeform bewegen sich die Stützstellen 31 an den Wellen 9 a bzw. an den Gelenken zwischen den Düsenkästen 36 nicht genau vertikal, sondern führen zugleich eine Schwenkbewegung aus. Der Vorteil dieser Konstruktion liegt darin, daß der Spalt zwischen den Düsenkästen 36 mit minimaler Breite ausgeführt werden kann. Diese Lösung ist in Figur 4 schematisch dargestellt.

Eine andere Lösung besteht darin, daß die Stützstellen 31 nur vertikal verfahren werden, also starr mit den Hubbalken 32 verbunden sind. Dies erfordert, daß die Breite der Düsenkästen nicht größer als die Mindestsehnenlänge zwischen den Stützstellen 31 bei geringer Durchbiegung sein darf. Die Stützstellen der Düsenkästen müssen neben einer Drehbewegung auch eine Schiebebewegung gestatten. Dadurch vergrößert sich der Spalt zwischen den Düsenkästen mit zunehmender Durchbiegung. Zur Vermeidung einer Störung der Abkühlwirkung infolge dieser Spalte müssen dann die Düsenstrahlen an den Rändern der Düsenkästen entsprechend geneigt werden, so daß trotz dieses Spaltes die Glasscheibe gleichmäßig beaufschlagt wird.

Der große Vorteil dieser Vorrichtung besteht darin, daß, wie bereits erwähnt, keinerlei Formenwechsel oder aufwendige Montagevorgänge notwendig sind, um die Vorrichtung auf unterschiedlichste Wölbungen der Glasscheiben 25 einzustellen. Außerdem ist es möglich, die gesamte Vorrichtung mit einem Mikrorechner zu steuern. Dadurch verringern sich die erforderlichen Umstellzeiten bei einer Änderung der Biegeform auf wenige Minuten. Ein weiterer großer Vorteil ist, daß auch nach abgeschlossenem Biegevorgang die saubere plane Führung der Scheibenkanten erhalten bleibt. Dies ist, wie ebenfalls bereits erwähnt, besonders bei Architekturscheiben wichtig, die in Rahmen gefaßt werden müssen. Außerdem entfallen natürlich die beim Vertikal-Biege- und Vorspannverfahren unvermeidlichen Aufhängepunkte der Zangen für die Halterung der Glasscheiben.

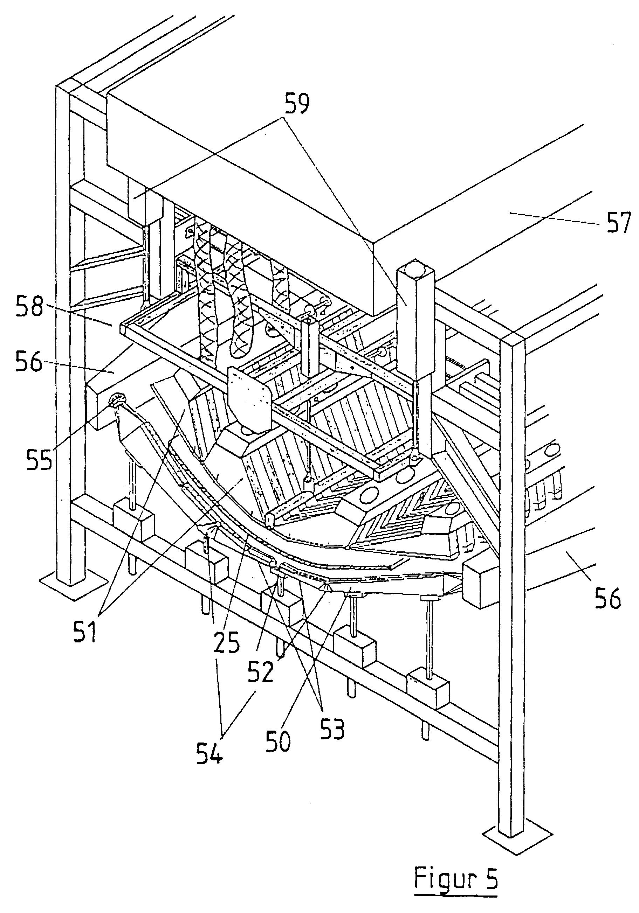

Eine weitere besonders vorteilhafte Ausführungsform der Abkühlstrecke nach Figur 5 benutzt ein für höchsten Wärmeübergang entworfenes Lochdüsensystem mit Düsenarmen 50 und Düsenrippen 51. Die Düsenarme 50 sind unterhalb der gewölbten Glasscheibe 25 zwischen den gebogenen Formstäben, welche aus den mit Rollen 9 b bestückten biegsamen Wellen 9 a bestehen, zur Auflage der Glasscheibe 25 angebracht. Sie sind mit den Stützstellen zur Verstellung der Form dieser Transportstäbe - in der Figur 5 sind die Transportstäbe wegen der besseren Übersichtlichkeit der Darstellung nicht eingezeichnet - verbunden. Die mittlere Stützstelle 52 stellt einen Anschlag für die Endstücke 53 der Düsenarme 50 dar, welche durch den Düsendruck, der beim Betrieb der Abkühlstrecke herrscht, automatisch gegen diesen Anschlag gedrückt werden.

Die elastische Verbindung 54 zwischen diesem schwenkbaren Endteil 53 der Düsenarme 50 und dem mit den äußeren Stützstellen verbundenen Teil derselben erfolgt mittels eines elastischen Faltenbalges. Die Düsenarme ihrerseits sind mit flexiblen Schlauchverbindungen 55 an die zu beiden Seiten der Vorrichtung befindlichen Luftverteilkästen 56 angeschlossen. Wenn nun Glas in der Vorrichtung bricht, wird die Luftzufuhr mittels Klappen (nicht dargestellt) abgesperrt. Die Endstücke der Düsenarme 50 klappen nach unten, das Glas kann auf den geneigten Düsenarmen und Formstäben nach innen rutschen und zwischen den Formstäben nach unten aus der Vorrichtung herausfallen.

Oberhalb der Glasscheibe sind vier Düsenrippensegmente 51 angebracht, die mittels Seilen und Stangen höhenverstellbar aufgehängt sind. Mit Hilfe der Höhenverstellung und der Gelenkpunkte zwischen den Segmenten läßt sich in einem weiten Bereich die Form des Düsenfeldes einstellen, die mit der erforderlichen Genauigkeit der Biegeform der Glasscheibe 25 entspricht. Der Anschluß an den oberhalb der Vorrichtung angebrachten Luftverteilkasten 57 erfolgt wiederum mit flexiblen Schlauchleitungen. Das gesamte obere Düsensystem ist in einem Rahmen 58 aufgehängt, der zwecks besserer Zugänglichkeit im Fall von Glasbruch mittels geeigneter Hubelemente - in Figur 5 sind Luftzylinder 59 dargestellt - schnell angehoben werden kann.

Die Rollen 8 b oder 9 b der Formstäbe 8 oder 9 sowie die Rollen 26 der Seitenführung für die Glasscheiben 25 können zweckgemäß aus verdichtetem Silikat-Fasermaterial mit hoher Druckfestigkeit, hoher Abriebfestigkeit und hoher Temperaturbeständigkeit gefertigt werden.

## Patentansprüche

1. Vorrichtung (3) zum vorzugsweise zweidimensionalen Wölben von auf die Erweichungstemperatur erwärmten Glasscheiben (25) mit mehreren beweglichen, eine horizontale Auflageflächen bildenden Transportstäben (7) für die plane Glasscheibe, wobei die Tratsportstäbe (7) in zwei Gruppen vorgesehen sind und von ihrer jeweiligen Lagerung (15) an den beiden seitlichen Rändern eines Rollenherdes in die Rollenherdfläche auskragen, wobei die beiden höhenverstellbaren Gruppen von Transportstäben (7) durch eine Schwenkbewegung über ihre jeweiligen Lagerungen (15) nach unten zwischen die linienhaften Formelemente (8) schwenkbar sind, dadurch gekennzeichnet, daß
a) mehrere Formelemente (8) auf die gewünschte Kontur der zu wölbenden Glasfläche einstellbar sind;
b) die linienhaften Formelemente (8) durch biegsame Wellen (8a) und bereichsweise an der Scheibe anliegende Rollen (8b) gebildet werden, die zum Weitertransport der Scheibe während und nach dem Biegevorgang angetrieben werden können; und
c) die Positionen der Achsen (16), um die die beiden Transportstabgruppen nach unten verschwenkbar sind, auch in der Richtung der Breite verstellbar sind.

2. Vorrichtung nach Anspruch 1, dadurch gekennzeichnet, daß die Gruppen der insbesondere geraden Transportstäbe (7) sich in der horizontalen Ausgangslage im Mittenbereich der Rollenherdfläche überlappen bzw. kammartig durchdringen.

3. Vorrichtung nach einem der Ansprüche 1 oder 2, dadurch gekennzeichnet, daß die biegsamen Wellen (8a) Stützstellen (19) in Form von Lagerhülsen aufweisen, die von unterhalb der Formelemente (8) befindlichen Hubelementen (20) gehalten werden, wobei durch Einstellen der Stützstellen mittels der Hubelemente die gewünschte Biegeform erreicht wird.

4. Vorrichtung nach einem der Ansprüche 1 bis 3, dadurch gekennzeichnet, daß die Verstellung der Hubelemente, beginnend in der geraden oder wenig verformten Ausgangslage der biegsamen Welle (8a) bis zur gewünschten Endposition der jeweiligen Stützstellen (19) mit der gleichen Verstellzeit erfolgt, wodurch die jeweilige Verstellgeschwindigkeit dem jeweiligen Verstellweg umgekehrt proportional ist.

5. Vorrichtung nach einem oder mehreren der Ansprüche 1 bis 4, dadurch gekennzeichnet, daß sich der Vorrichtung (3) eine Abkühlstrecke (4) anschließt, die gleiche oder ähnliche linienhafte Formelemente (9) aufweist, wie die Vorrichtung (3).

6. Vorrichtung nach einem der Ansprüche 1 bis 5, dadurch gekennzeichnet, daß die jeweils von einer Transportstabgruppe erzeugte Tangentialebene nach dem Abwärtsschwenken dieser Gruppen tangential in die zweidimensionale Formfläche einläuft, die von den linienhaften Formelementen (8) gebildet wird, und auf diese Weise die gewölbte Glasscheibe (25) im Bereich ihrer Seitenkanten eine plane Führung erhält.

7. Vorrichtung nach einem der Ansprüche 1 bis 6, dadurch gekennzeichnet, daß über mehreren Transportstäben (7) Führungsrollen (26) zur Führung der Glasscheibe (25) an ihren Seitenkanten angebracht sind, deren Achsen auf der von den Transportstäben aufgespannten Tangentialebene senkrecht stehen.

8. Vorrichtung nach Anspruch 7, dadurch gekennzeichnet, daß die Führungsrollen (26) angetrieben sind.

9. Vorrichtung nach Anspruch 8, dadurch gekennzeichnet, daß die Führungsrollen (26) zur Anpassung an die jeweilige Glasstärke in Richtung ihrer Achsen verstellbar sind.

10. Vorrichtung nach einem der Ansprüche 7 bis 9, dadurch gekennzeichnet, daß die Führungsrollen (26) einzeln oder gemeinsam in Achsrichtung der Transportstäbe (7) verstellbar sind.

11. Vorrichtung nach einem der Ansprüche 7 bis 10, dadurch gekennzeichnet, daß die Verstellbewegung der Führungsrollen (26) synchron und kinematisch gekoppelt mit der Schwenkbewegung der Transportstäbe (7) erfolgt.

12. Vorrichtung nach einem der Ansprüche 1 bis 11, dadurch gekennzeichnet, daß sich an die Vorrichtung (3) eine Abkühlstrecke (4) mit Düsenkästen (36) anschließt, die gemeinsam mit den die Form der Formstäbe (9) verändernden Hubelementen (32), welche an den Stützstellen (31) der Formstäbe (9) angreifen, verstellt werden.

13. Vorrichtung nach einem der Ansprüche 7 bis 12, dadurch gekennzeichnet, daß die seitliche Führung (27) bzw. die seitlichen Führungsrollen (26) über eine vorzugsweise auswechselbare Kurvenscheibe (41) in vorbestimmter Weise mit der Schwenkbewegung der Transportstäbe (7) gekoppelt sind.

14. Vorrichtung nach einem der Ansprüche 5 bis 13, dadurch gekennzeichnet, daß die Rollen (8b) in der Vorrichtung (3) aus verdichtetem Silikat-Fasermaterial mit hoher Druckfestigkeit und hoher Abriebfestigkeit gefertigt sind.

15. Vorrichtung nach einem der Ansprüche 7 bis 14, dadurch gekennzeichnet, daß die seitlichen Führungsrollen (26) und Rollen (9b) in der Abkühlstrecke (4) aus verdichtetem Silikat-Fasermaterial mit hoher Druckfestigkeit und hoher Abriebfestigkeit gefertigt sind.

16. Vorrichtung nach einem oder mehreren der Ansprüche 5 bis 15, dadurch gekennzeichnet, daß die Abkühlstrecke unterhalb der Glasscheibe (25) zwischen den Formstäben (9) angeordnete, schwenkbare und in deren Längsrichtung verschiebbare Düsenarme (50) aufweist, deren Endstücke (53) um eine in Transportrichtung weisende Achse drehbar sind und in Arbeitsposition gegen mit den Stützstellen der Formstäbe verbundene Anschläge gedrückt werden.

## Claims

1. An apparatus (3) for preferably two-dimensionally curving sheets of glass (25) heated to their softening temperature, comprising a plurality of movable transport rods (7) forming a horizontal supporting surface for the planar glass sheet, said transport rods (7) being provided in two groups and projecting from their respective mounting (15) at the two lateral edges of a roller hearth furnace into the the roller hearth face, said two height-adjustable groups of transport rods (7) being pivotal by a pivot movement via said respective mountings (15) downwardly between linear shaping members (8), characterized in that
a) a plurality of said shaping members (8) is adjustable to the desired contour of the glass surface to be curved;
b) said linear shaping members (8) are formed by flexible shafts (8a) and rollers (8b) in regional contact with said sheet which for transporting said sheet may be driven during and after the bending action; and
c) the positions of the axes (16) about which said two groups of transport rods are downwardly pivotal are also adjustable width-wise.

2. The apparatus as set forth in claim 1, characterized in that said groups of in particular straight transport rods (7) overlap or comb each other in the horizontal starting position in the middle region of the roller hearth face.

3. The apparatus as set forth in any of the claims 1 or 2, characterized in that said flexible shafts (8a) have supporting points (19) in the form of bearing sleeves which are held by lifting members (20) disposed beneath said shaping members (8), the desired bending shape being achieved by setting said supporting points by means of said lifting members.

4. The apparatus as set forth in any of the claims 1 to 3, characterized in that the adjustment of said lifting members takes place starting in the straight or slightly deformed initial position of said flexible shafts (8a) up to the desired final position of said respective supporting points (19) with the same adjusting time so that the respective speed of adjustment is inversely proportional to the respective distance of adjustment.

5. The apparatus as set forth in any of the claims 1 to 4, characterized in that said apparatus (3) is followed by a cooling section (4) having the same or similar linear shaping members (9) as said apparatus (3).

6. The apparatus as set forth in any of the claims 1 to 5, characterized in that the tangential plane generated by a respective transport rod group after the downward pivoting of said groups runs tangentially into the two-dimensional shaping surface which is formed by said linear shaping members (8) and by such means said curved sheet of glass (25) receives planar guidance in the region of its lateral edges.

7. The apparatus as set forth in any of the claims 1 to 6, characterized in that above a plurality of transport rods (7) guide rollers (26) are arranged for guiding said sheet of glass (25) at its lateral edges, the axes of said guide rollers being perpendicular to the tangential plane extended by said transport rods.

8. The apparatus as set forth in claim 7, characterized in that said guide rollers (26) are driven.

9. The apparatus as set forth in claim 8, characterized in that said guide rollers (26) are adjustable in the direction of their axes for adapting to the respective glass thickness.

10. The apparatus as set forth in any of the claims 7 to 9, characterized in that said said guide rollers (26) are individually or jointly adjustable in the axial direction of said transport rods (7).

11. The apparatus as set forth in any of the claims 7 to 10, characterized in that the adjusting movement of said guide rollers (26) takes place synchronously and kinematically coupled with the pivot movement of said transport rods (7).

12. The apparatus as set forth in any of the claims 1 to 11, characterized in that said apparatus (3) is followed by a cooling section (4) having nozzle boxes (36) that are adjusted jointly with said lifting members (32) which change the shape of said shaping rods (9) and engage said supporting points (31) of said shaping rods (9).

13. The apparatus as set forth in any of the claims 7 to 12, characterized in that said lateral guidance (27) or said lateral guide rollers (26) are coupled via a preferably exchangeable cam disc (41) in predetermined manner to the pivot movement of said transport rods (7).

14. The apparatus as set forth in any of the claims 5 to 13, characterized in that said rollers (8b) in said apparatus (3) are manufactured from a compressed silicate fiber material having high compressive strength and high resistance to abrasion.

15. The apparatus as set forth in any of the claims 7 to 14, characterized in that said lateral guide rollers (26) and rollers (9b) in said cooling section (4) are manufactured from a compressed silicate fiber material having high compressive strength and high resistance to abrasion.

16. The apparatus as set forth in one or any of the claims 5 to 15, characterized in that said cooling section comprises pivotal nozzle arms (50) which are arranged beneath said sheet of glass (25) between said shaping rods (9) and are displaceable in the longitudinal direction thereof, the end pieces (53) of which are rotatable about an axis pointing in the transport direction and in the operating position are pressed against stops connected to said supporting points of said shaping rods.

## Revendications

1. Dispositif (3) pour le cintrage, de préférence bidimensionnel, de vitres (25) réchauffées à la température de ramollissement, comportant plusieurs barreaux de transport (7) mobiles formant une surface de pose horizontale pour la vitre plane, tandis que les barreaux de transport (7) sont prévus en deux groupes et que sur les deux bords latéraux d'une nappe de rouleaux, ils débordent depuis chacun de leurs paliers (15) dans la surface de la nappe de rouleaux, tandis que les deux groupes ajustables en hauteur de barreaux de transport (7) peuvent être pivotés vers le bas entre les éléments linéaires de formage (8), par un déplacement de pivotement par l'intermédiaire de chacun de leurs paliers (15), caractérisé en ce que
a) plusieurs éléments de formage (8) peuvent être ajustés au profil désiré de la surface de verre à cintrer;
b) les éléments linéaires de formage (8) sont formés par des arbres flexibles (8a) et des rouleaux (8b) reposant par zones sur la vitre, et qui peuvent être entraînés pour poursuivre le transport de la vitre pendant et après l'opération de cintrage; et
c) la position des axes (16) autour desquels les deux groupes de barreaux de transport peuvent être inclinés vers le bas est également ajustable dans le sens de la largeur.

2. Dispositif selon la revendication 1, caractérisé en ce que, dans la position horizontale initiale, les groupes de barreaux de transport (7), en particulier rectilignes, se recouvrent ou s'intercalent mutuellement à la façon d'un peigne dans la région médiane de la surface de la nappe de rouleaux.

3. Dispositif selon l'une des revendications 1 ou 2, caractérisé en ce que les arbres flexibles (8a) présentent des points d'appui (19) présentant la forme de manchons de palier qui sont maintenus bar des éléments de levage (20) situés en dessous des éléments de formage (8), tandis que la forme souhaitée du cintrage est obtenue par ajustement des points d'appui au moyen des éléments de levage.

4. Dispositif selon l'une des revendications 1 à 3, caractérisé en ce que l'ajustement des éléments de levage, commençant dans la position initiale rectiligne ou peu déformée des arbres flexibles (8a) pour se poursuivre jusque dans la position finale désirée de chaque point d'appui (19), s'effectue dans le même laps de temps d'ajustement, suite à quoi la vitesse d'ajustement est inversement proportionnelle à chaque longueur d'ajustement.

5. Dispositif selon l'une ou plusieurs des revendications 1 à 4, caractérisé en ce qu'au dispositif (3) se raccorde une zone de refroidissement (4) qui présente des éléments linéaires de formage (9) identiques ou similaires à ceux du dispositif (3).

6. Dispositif selon l'une des revendications 1 à 5, caractérisé en ce qu'après l'inclinaison vers le bas de ces groupes, le plan tangent créé par un groupe de barreaux de transport coïncide tangentiellement avec la surface bidimensionnelle qui est formée par les éléments linéaires de formage (8), et de cette manière la vitre cintrée (25) conserve un guidage plan dans la région de ses bords latéraux.

7. Dispositif selon l'une des revendications 1 à 6, caractérisé en ce que des rouleaux de guidage (26) pour le guidage de la vitre (25), dont les axes sont perpendiculaires au plan tangent sous-tendu par les barreaux de transport, sont installés sur ses bords latéraux, au-dessus de plusieurs barreaux de transport (7).

8. Dispositif selon la revendication 7, caractérisé en ce que les rouleaux de guidage (26) sont entraînés.

9. Dispositif selon la revendication 8, caractérisé en ce que les rouleaux de guidage (26) peuvent être ajustés dans la direction de leur axe pour l'adaptation à chaque épaisseur de verre.

10. Dispositif selon l'une des revendications 7 à 9, caractérisé en ce que les rouleaux de guidage (26) peuvent être ajustés individuellement ou en commun, dans la direction axiale des barreaux de transport (7).

11. Dispositif selon l'une des revendications 7 à 10, caractérisé en ce que le déplacement d'ajustement des rouleaux de guidage (26) s'effectue en synchronisme et de manière cinématiquement accouplée avec le déplacement d'inclinaison des barreaux de transport (7).

12. Dispositif selon l'une des revendications 1 à 11, caractérisé en ce qu'au dispositif (3) se raccorde une zone de refroidissement (4) comportant des caissons à buses (36) qui sont ajustés en commun avec les éléments de levage (32) modifiant la forme des barreaux de formage (9) et engageant les barreaux de formage (9) aux points d'appui (31).

13. Dispositif selon l'une des revendications 7 à 12, caractérisé en ce que le guidage latéral (27) ou les rouleaux latéraux de guidage (26) sont accouplés de manière prédéterminée au déplacement d'inclinaison des barreaux de transport (7), par l'intermédiaire d'une came (41) de préférence échangeable.

14. Dispositif selon l'une des revendications 5 à 13, caractérisé en ce que les rouleaux (8b) du dispositif (3) sont fabriqués en un matériau en fibres de silicate compactées, présentant une haute résistance à la compression et une haute résistance à l'érosion.

15. Dispositif selon l'une des revendications 7 à 14, caractérisé en ce que les rouleaux latéraux de guidage (26) et les rouleaux (9b) de la zone de refroidissement (4) sont fabriqués en un matériau en fibres de silicate compactées, présentant une haute résistance à la compression et une haute résistance à l'érosion.

16. Dispositif selon l'une ou plusieurs des revendications 5 à 15, caractérisé en ce que la zone de refroidissement présente des bras à buses (50) pivotants et déplaçables dans la direction longitudinale, disposés en dessous de la vitre (25), entre les barreaux de formage (9), et dont les pièces d'extrémité (53) peuvent tourner autour d'un axe tourné dans la direction de transport et être repoussés en position de travail contre des butées reliées aux points d'appui des barreaux de formage.
